# EUROPÄISCHE PATENTSCHRIFT

(11) **EP 1 386 862 B1**
(45) Veröffentlichungstag und Bekanntmachung des Hinweises auf die Patenterteilung: **02.08.2006**
(21) Anmeldenummer: 03014189.9
(22) Anmeldetag: 24.06.2003
(51) Int. Cl.: B65G 47/26, B65G 25/02

(54) **Förderstrecke mit einer steuerbaren Staueinrichtung**
Conveyor section with a controllable accumulation
Ligne de transport avec accumulation règlable

(30) Priorität: 31.07.2002 DE 10234919
(43) Veröffentlichungstag der Anmeldung: 04.02.2004
(73) Patentinhaber: SIEMENS AKTIENGESELLSCHAFT, 80333 München (DE)
(72) Erfinder: Hug, Jürgen, 63110 Rodgau (DE); Kuhn, Michael, 63512 Hainburg (DE)

(56) Entgegenhaltungen:
- DE-A- 19 636 024
- FR-A- 546 169
- US-A- 4 779 472
- US-B1- 6 168 007

## Beschreibung

Die Erfindung bezieht sich auf eine Förderstrecke mit zumindest einer steuerbaren Staueinrichtung und zumindest einem Bandtransport für darauf aufliegende Behälter.

Eine gattungsgemäße Förderstrecke ist aus der DE 196 36 024 C2 bekannt. Derartige Förderstrecken mit z.B. aus Zahnriemenpaaren gebildeten Bandtransporten dienen dem Transport von Stückgütern, z. B. von Gepäckstücken in Gepäckverteilanlagen. Der Begriff "Behälter" beschränkt sich nicht nur auf geschlossene Behältnisse, sondern umfasst auch offene Behälter wie z. B. Paletten mit gitterartigen, nach oben offenen Seitenbegrenzungen. Eine derartige Förderstrecke kann eine Zwischenspeicherfunktion übernehmen, indem sie als Stauförderstrecke ausgebildet wird. Bisher war es üblich, derartige Förderstrecken in einzeln betreibbare Teilstrecken zu segmentieren, um eine entsprechende Anzahl von Behältern stoppen zu können, was mit entsprechendem Antriebs- und Steuerungsaufwand verbunden ist.

Ferner ist es z. B. durch die DE 19850615 A bekannt, Paletten für Werkstücke mit schaltbaren Kupplungen zu versehen, die eine Trennung von antreibenden Zugmittel und damit ein Stoppen der Palette auf der Förderstrecke ermöglichen. Derartige aktive Paletten sind entsprechend aufwendig und eigenen sich daher nicht für lange Förderbahnen mit einer großen Anzahl von Stückgut-Trägern.

Schließlich ist durch die DE 19816960 A eine Verzweigungs- oder Überschiebestation für Fördereinrichtungen bekannt geworden, bei denen die einzelnen Behälter je nach dem betreffenden Auftrag unterschiedliche Richtungen erhalten können. Um mit dieser Station die Behälter von der jeweiligen Förderstrecke zu entkoppeln, sind zu beiden Seiten des Förderers anhebbare, kufenartige Bremselemente vorgesehen, die die Behälter von der Förderstrecke abheben, wobei die Bremselemente mittels schräg nach oben weisender Kulissenführungen und eines Pneumatikzylinders betätigt werden. Dabei muss während des Einschaltvorganges der Pneumatikzylinder unter Druckbeaufschlagung bleiben, um ein Zurücksinken der Bremskufen zu vermeiden.

Der Erfindung liegt die Aufgabe zugrunde, den Herstellungsaufwand für die Förderstrecke zu verringern, die Funktion zu vereinfachen und den Verschleiß in den Antriebs- und Führungselementen sowie den Hebemitteln zu reduzieren.

Diese Aufgabe wird erfindungsgemäß dadurch gelöst, dass die Hebemittel jeweils durch einen von einem Elektro-Getriebemotor betätigten Kniehebel heb- und senkbar sind, dessen Hebel einerseits am Rahmen und andererseits an der Kufe angreifen und dessen Gelenk über eine in einer vertikalen Ebene umlaufende Kurbel mit dem Elektro-Getriebemotor verbunden ist, wobei der Elektro-Getriebemotor horizontal gleitgeführt gegenüber dem Rahmen verschiebbar gelagert ist.

Die Anwendung von Hebemitteln in Verbindung mit einem elektromotorisch betätigten Kniehebel erfordert einen geringeren Herstellungsaufwand, da eine Synchronisation mehrerer Einzelantriebe ist nicht erforderlich ist.

Durch den Kniehebelmechanismus wird es möglich, den Hubantrieb bistabil auszubilden, indem die Kniehebel in eine selbsthemmende gestreckte Stellung gebracht werden. Das Problem des Längenausgleiches beim Knicken und Strecken eines Kniehebels, das bislang durch Anordnung von Langlöchern in mindestens einem der Hebel gelöst wurde, wird durch die Erfindung in einer einfachen und preiswerten Weise dadurch gelöst, dass der Elektro-Getriebemotor horizontal gegenüber dem Rahmen verschiebbar ist. Nicht das Gelenk verschiebt sich in einem Langloch des Hebels sondern der gesamte Antrieb bewegt sich beim Umlauf der Kurbel horizontal gegenüber dem Rahmen. Damit entfällt das verschleißanfällige Langloch, dessen Herstelllung oft schwierig ist; die einzuleitenden Kräfte werden besser verteilt, die Leistungsverluste sind geringer; insgesamt wird so ein sehr stabiler und haltbaren Antrieb geschaffen.

Besonders günstig ist es, wenn nach einem weiteren Merkmal der Erfindung der Elektro-Getriebemotor auf einem Schlitten befestigt ist, der beidseitig in Schienen gleitend geführt ist. Durch diese Maßnahmen wird das System stark vereinfacht, indem der serienmäßige Antrieb einfach auf den Schlitten geschraubt wird. Dieser ist in Schienen gleitend geführt, wobei es ausreicht, wenn nach einem anderen Merkmal der Erfindung die Schienen aus einem verschleißfesten Kunststoff mit hohen Gleiteigenschaften bestehen. Solche problemlos zu verarbeitenden Schienen sind preiswert und beständig.

Durch die Weiterbildung nach Anspruch 4 ist es möglich, eine Vielzahl von Behältern, z. B. über Lichtschranken gesteuert, aufzustauen.

Im Folgenden wird die Erfindung anhand eines in der Zeichnung dargestellten Ausführungsbeispieles näher erläutert.
- Figur 1: zeigt eine Stirnansicht einer Förderstrecke mit einer Staueinrichtung,
- Figur 2: einen Schnitt entlang der Linie II-II in Figur 1,
- Figur 3: eine vergrößerte Darstellung des Kniehebelantriebes in abgesenkter Stellung der Kufen,
- Figur 4: eine vergrößerte Darstellung des Kniehebelantriebes in angehobener Stellung der Kufen und
- Figur 5: einen Querschnitt durch den Antrieb im Bereich des Kniehebelgelenkes.

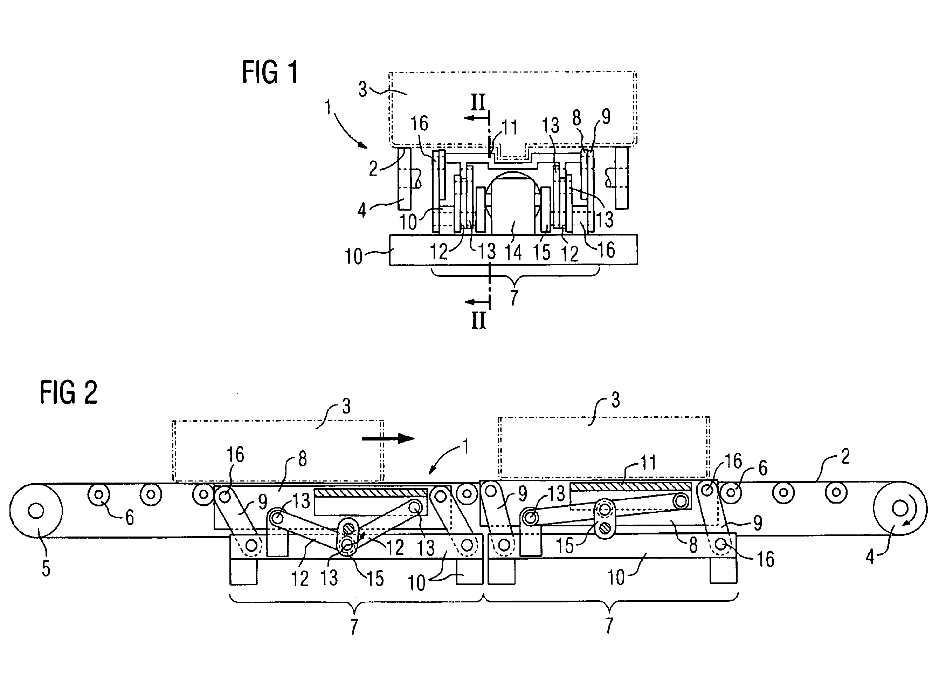

Nach den Figuren 1 und 2 weist eine Förderstrecke 1 ein umlaufendes Paar von Zahnriemen 2 auf, auf deren Oberseite Behälter 3 transportierbar sind. Die Zahnriemen sind über Antriebsräder 4 und Umlenkräder 5 geführt und in ihrem oberen Trum von Stützrollen 6 unterstützt. Zwischen den Zahnriemenpaaren sind unmittelbar hintereinanderliegend zwei Staueinrichtungen 7 angeordnet, von denen nach Figur 2 die linke nicht aktiviert und die rechte aktiviert ist.

Die Staueinrichtung 7 besteht im Wesentlichen aus zwei Kufen 8, Trapezlenkern 9, einem Rahmen 10, einer Traverse 11 sowie einem aus den Hebeln 12 und dem Gelenk 13 gebildeten Kniehebel, der mittels eines elektrisch Getriebemotors 14 über die Kurbel 15 betätigt wird.

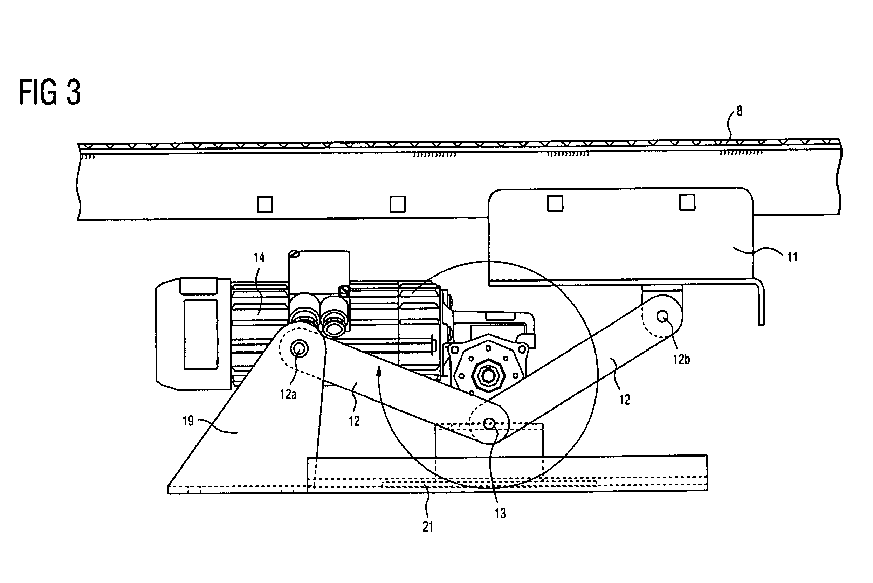

Die Trapezlenker 9 sind durch Trapezgelenke 16 am Chassis 10 schwenkbar gelagert und über weitere Trapezgelenke 16 mit den Kufen 8 schwenkbar verbunden. Die Traverse 11 erstreckt sich zwischen den Kufen 8 und ist mit diesen an ihren Enden fest verbunden. Die Hebel 12 der Kniehebel sind einerseits stationär ausgebildet und am Rahmen 10 bzw. an der am Rahmemn 10 befestigten Konsole 19 angelenkt und andererseits mit der Kufe 8 über die Traverse 11 verbunden. Die Gelenke 13 der Kniehebel sind auf der Kurbel 15 gelagert, die ihrerseits Teil des Elektro-Getriebemotors 14 ist. Wie in Figur 3 an der durch den Pfeil gekennzeichneten Umlaufrichtung zu erkennen ist, ergibt sich beim Umlauf der Kurbel des Elektro-Getriebemotors 14 in der vertikalen Ebene infolge der sich ändernden Winkelstellung der Hebel 12 zueinander ein sich verändernder Abstand zwischen den Gelenken 12a und 12b. Dieser sich verändernde Abstand wird nicht, wie sonst üblich, durch Langlöcher in den Hebeln 12 kompensiert, sondern nach der Erfindung dadurch, dass der Elektro-Getriebemotor 14 bei 21 horizontal gleitgeführt gegenüber dem Rahmen 10 verschiebbar gelagert ist.

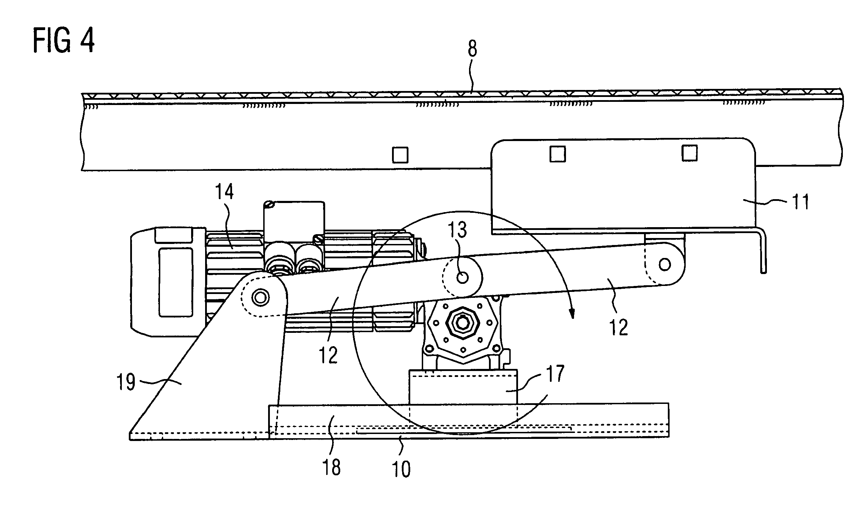

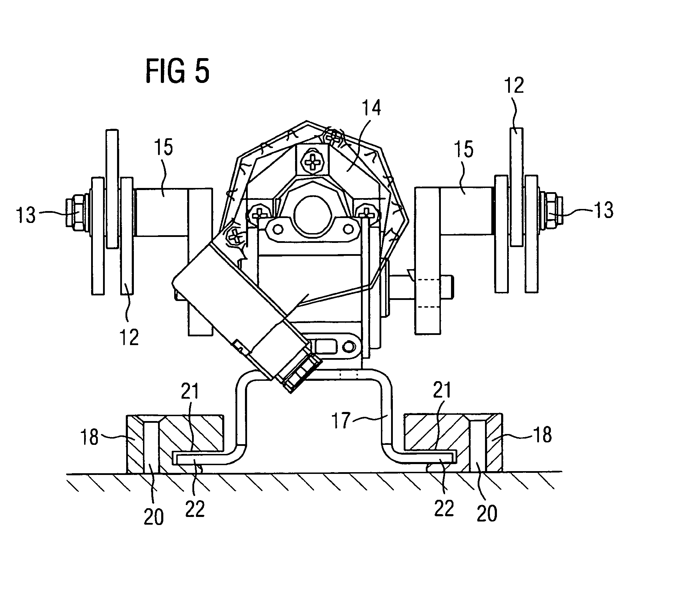

Im Ruhezustand befindet sich die Oberkante der Kufen 8 unter dem Auflageniveau der Behälter 3 auf den Zahnriemen 2. Die Hebel 12 des Kniehebelmechanismus weisen dann die in Figur 3 erkennbare, zueinander geknickte Stellung auf. Durch Drehung der Kurbel 15 um ca. 180° werden die Hebel 12 in die zueinander gestreckte Stellung gebracht, die in Figur 4 dargestellt ist. Dabei wird die Traverse 11 mit den Kufen 8 entsprechend dem Anstellwinkel der Trapezlenker 9 entlang einem Kreisbogen schräg nach oben über das Auflageniveau der Behälter 3 hinausgedrückt, wie dies an der aktivierten Staueinrichtung 7 (rechte Seite von Figur 2)erkennbar ist. Der Behälter 3 wird dabei von den Zahnriemen 2 abgehoben, der dann zum Transport anderer der Behälter 3 ohne Auswirkung auf den angehobenen Behälter 3 weiter betrieben werden kann. Zum Weitertransport des gestauten Behälters 3 wird die Kurbelwelle 15 um eine halbe Umdrehung in die in der linken Staueinrichtung 7 (Figur 2) gezeigte Stellung weitergedreht, wobei die Kufen 8 unter das Auflagenniveau der Zahnriemen 2 gelangen und der Behälter 3 auf diese aufgesetzt wird. Dabei verschiebt sich der Elektro-Getriebemotor 14, je nach Umfangsstellung der Kurbel 15 entlang seiner Führung 21 am Rahmen 10 in den Schienen 18, die in der Figur 5 erkennbar sind. Die aus Kunststoff gebildeten Schienen 18 sind am Rahmen 10 bei 20 verschraubt und weisen Schlitzführungen 21 im Kunststoff auf, in denen flache Ansätze 22 des Schlittens 17 geführt sind.

## Patentansprüche

1. Förderstrecke (1) mit zumindest einer steuerbaren Staueinrichtung (7) und zumindest einem, z.B. aus Zahnriemen (2) gebildeten, über die Förderstrecke (1) durchgehend ausgebildet Bandtransport für darauf aufliegende Behälter (3), wobei die stationäre Staueinrichtung (7) zum Abheben zumindest eines der Behälter (3) vom Bandtransport längsseitig neben dem Bandtransport angeordnete Hebemittel aufweist, die als an Trapezlenkern (9) gelagerte Kufen (8) ausgebildet sind.
**dadurch gekennzeichnet , dass** die Hebemittel jeweils durch einen von einem Elektro-Getriebemotor (14) betätigten Kniehebel (12, 13) heb- und senkbar sind, dessen Hebel einerseits am Rahmen und andererseits an der Kufe angreifen und dessen Gelenk über eine in einer vertikalen Ebene umlaufende Kurbel mit dem Elektro-Getriebemotor (14) verbunden ist, wobei der Elektro-Getriebemotor (14) horizontal gleitgeführt gegenüber dem Rahmen verschiebbar gelagert ist.

2. Förderstrecke nach Anspruch 1,
**dadurch gekennzeichnet , dass** der Elektro-Getriebemotor (14) auf einem Schlitten (17) befestigt ist, der beidseitig in Schienen (18) gleitend geführt ist.

3. Förderstrecke nach Anspruch 1 und 2,
**dadurch gekennzeichnet , dass** die Schienen (18) aus einem verschleißfesten Kunststoff mit hohen Gleiteigenschaften bestehen.

4. Förderstrecke nach Anspruch 1 bis 3,
**dadurch gekennzeichnet , dass** eine Mehrzahl der Staueinrichtungen (7) entlang der Förderstrecke (1) aneinander gereiht ist und
dass die einzelnen Staueinrichtungen (7) individuell betätigbar sind.

## Claims

1. Conveyor section (1) having at least one controllable accumulating device (7) and at least one belt transport for containers (3) resting thereon, which belt transport is formed, for example, of toothed belts (2) and is configured so as to pass continuously over the conveyor section (1), the stationary accumulating device (7), for lifting at least one of the containers (3) off the belt transport, having lifting means which are disposed beside the belt transport on the longitudinal side and are configured as skids (8) mounted on trapezoidal links (9), **characterized in that** the lifting means respectively can be raised and lowered by a toggle lever (12, 13) which is actuated by an electric geared motor (14) and the levers of which act, on the one hand, upon the frame and, on the other hand, upon the skid, and the joint of which is connected to the electric geared motor (14) by a crank rotating in a vertical plane, the electric geared motor (14) being mounted displaceably relative to the frame by horizontal slide-guidance.

2. Conveyor section according to Claim 1, **characterized in that** the electric geared motor (14) is fastened on a slide (17) which, on both sides, is guided slidingly in rails (18).

3. Conveyor section according to Claims 1 and 2, **characterized in that** the rails (18) consist of a wear-resistant plastic with good sliding properties.

4. Conveyor section according to Claims 1 to 3, **characterized in that** a plurality of accumulating devices (7) are lined up along the conveyor section (1) and **in that** the individual accumulating devices (7) can be actuated individually.

## Revendications

1. Parcours (1) de transport comportant au moins un dispositif (7) d'accumulation asservissable et au moins un convoyeur à bande, formé par exemple de courroies (2) dentées et réalisé continûment sur le parcours (1) de transport, pour des récipients (3) qui y sont posés, le dispositif (7) d'accumulation à poste fixe comportant, pour soulever du convoyeur à bande au moins un des récipients (3), des moyens de levage qui sont disposés longitudinalement à côté du convoyeur à bande et qui sont réalisés sous la forme de patins (8) monté sur des bras (9) articulés trapézoïdaux, **caractérisé en ce que** les moyens de levage peuvent être respectivement levés et abaissés par une genouillère (12, 13) actionnée par un moto-réducteur (14) électrique, genouillère dont les leviers agissent d'une part sur le bâti et d'autre part sur le patin et dont l'articulation est reliée au moto-réducteur (14) électrique par l'intermédiaire d'une manivelle tournant dans un plan vertical, le moto-réducteur (14) électrique étant monté à translation par rapport au bâti en étant guidé en coulissement horizontal.

2. Parcours de transport suivant la revendication 1, **caractérisé en ce que** le moto-réducteur (14) électrique est fixé sur un coulisseau (17) qui est guidé en coulissement de part et d'autre dans des glissières (18).

3. Parcours de transport suivant les revendications 1 et 2, **caractérisé en ce que** les glissières (18) sont réalisées en une matière plastique résistante à l'usure ayant de bonnes propriétés de glissement.

4. Parcours de transport suivant l'une des revendications 1 à 3, **caractérisé en ce qu'**une pluralité de dispositifs (7) d'accumulation sont juxtaposés le long du parcours (1) de transport, et **en ce que** les différents dispositifs (7) d'accumulation peuvent être actionnés individuellement.
